# EUROPEAN PATENT SPECIFICATION

(11) **EP 0 523 332 B1**
(45) Date of publication and mention of the grant of the patent: **26.07.1995**
(21) Application number: 92107373.0
(22) Date of filing: 30.04.1992
(51) Int. Cl.: A01B 59/043, F16B 45/02, B60D 1/04

(54) **Automatic locking and release mechanism for three-point hitches**
Automatischer Ver- und Entriegelungsmechanismus für Dreipunktgestänge
Mécanisme de verrouillage et de déclenchement automatique pour attelage à trois points

(30) Priority: 10.07.1991 IT MO910102
(43) Date of publication of application: 20.01.1993
(73) Proprietor: C.B.M. S.p.A., I-41100 Modena (IT)
(72) Inventor: Cornia, Enrico Maria, I-41100 Modena (IT)
(74) Representative: Modiano, Guido, Dr.-Ing.

(56) References cited:
- DE-A- 3 033 663
- FR-A- 2 221 325
- FR-A- 2 535 934
- FR-A- 2 555 398
- GB-A- 113 755
- GB-A- 2 235 359

## Description

The present invention relates to an automatic locking and release mechanism particularly for moving the latch for the automatic locking and controlled release of the ball pivots of tools supported and towed by agricultural machines, for lower hooks of three-point hitches.

Three-point couplings for agricultural machines have used, for a long time, lower hooks provided with automatic devices for receiving in their recess the corresponding ball pivots of the tools which the agricultural machine must use for its work.

Said hooks generally adopt a latch or an eccentric element which, by being pressed by the ball pivot during insertion, retracts automatically and allows said ball pivot to be seated in said recess; after said ball pivot has been seated, said latch protrudes again and partially occupies the useful entry opening of said recess.

The attention of technicians in the field has been concentrated mainly on the shape that the latch must have in order to achieve the dual purpose of first allowing the entry of said ball pivots and then locking them.

Attempts have also been made to meet another requirement, namely to be able to keep, when required, the latch retracted from the opening of the recess in order to be able to act in various manners on the hook.

Each of these is furthermore subject to strict statutory provisions which determine its peculiar dimensional characteristics and consequently its safety characteristics: for example, the hooks must have a body which encloses the moving mechanical parts as much as possible and have no protrusions from the profile of the ball pivot; this enclosure limits infiltrations of soil or other matter, which are minimized, to avoid possible damage to the mechanisms which actuate the latch or the like.

In this sense, the German patents no. 2617021 which discloses all the features of the preamble of claim 1, 2510490 and 2456971 filed in the name of Waltersheid propose three different solutions of latches which have various profiles and are associated with devices suitable for locking their stroke in open position in the recess of the hook.

However, it can be seen that all the mechanical elements which produce the overall movement are conceptually obsolete and of a very articulated movement; said movement, as mentioned, must furthermore occur inside the body of the hook in compliance with the normal and conventional requirements of safety in use.

On the other hand, for example, when the device which allows to lock the latch in open position is inserted, it normally opens a further opening, in addition to those strictly necessary for the passage of said latch, in the body of the hook, connecting the inside thereof to the outside and, practically, from above downward, i.e. in the normal direction in which the debris or other matter can fall.

The latch, too, is subjected to rotary and translatory motions, and its profile, in its various cross-sections, is very complex: thick portions, followed by tapered portions and concave seats for the sliding in contrast with supporting and reaction points, in fact, alternate longitudinally with one another.

The above solution, while providing good overall operation of known hooks, is complicated to manufacture and operate; this leads to high costs due both to the structure itself of the parts which compose the hooks and to the subsequent operations for ordinary and extraordinary maintenance; especially for maintenance, it is in fact absolutely necessary, for each operation, in the case of known hooks, to enter the body thereof through large access openings.

The technical aim of the present invention is to obviate the above described problems of the known art by providing a mechanism for moving the latch for the automatic locking and controlled release of the ball pivots of tools supported and towed by agricultural machines, for lower hooks of three-point hitches, which allows to obtain a very compact hook structure which is closed as much as possible but is combined with the possibility of easy maintenance interventions which can be performed even without requiring large openings in the hook body.

A further object of the present invention is to provide a mechanism for moving the latch for the automatic locking and controlled release of the ball pivots of tools supported and towed by agricultural machines, for lower hooks of three-point hitches, which is structurally simple and consequently has a substantially modest cost.

This aim and these objects are achieved by an automatic locking and release mechanism for three-point hitches, particularly for moving the latch for the automatic locking and controlled release of the ball pivots of tools supported and towed by agricultural machines, as defined in claims 1-4.

Further characteristics and advantages of the invention will become apparent from the description of a preferred but not exclusive embodiment of a mechanism for moving the latch for the automatic locking and controlled release of the ball pivots of tools supported by agricultural machines, for lower hooks of three-point hitches, illustrated only by way of non-limitative example in the accompanying drawings, wherein:

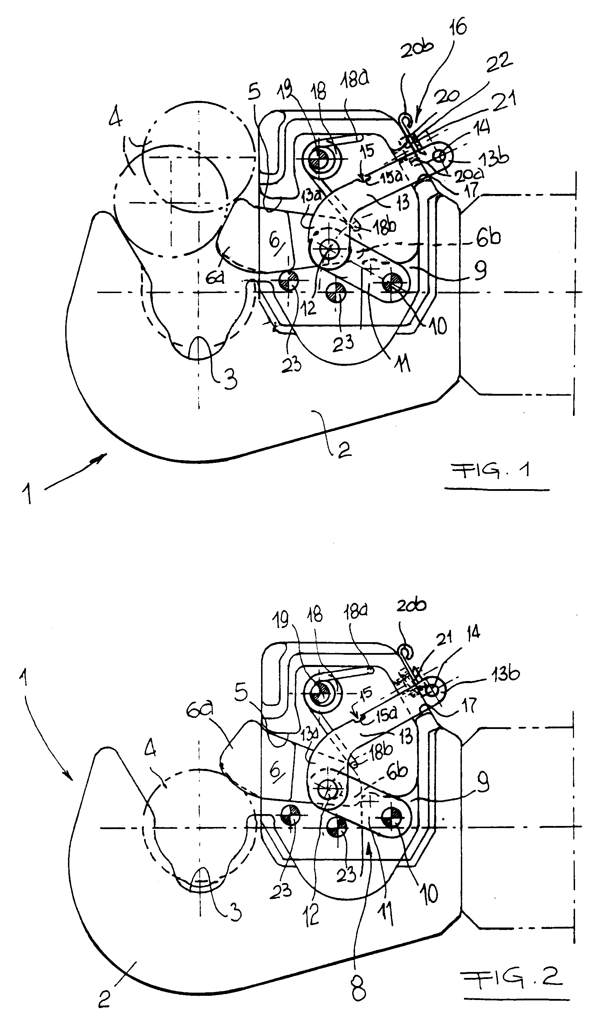

figures 1 and 2 are longitudinal sectional views of a hook equipped according to the invention, respectively during the two steps of insertion and locking of a ball pivot of a tool;

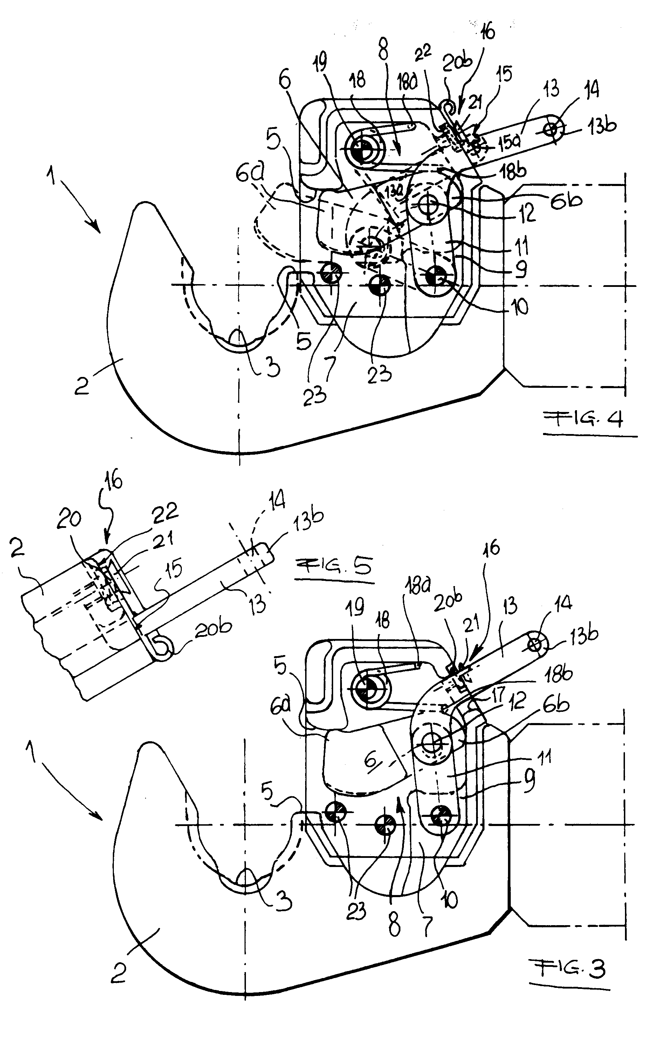

figures 3 and 4 are further longitudinal sectional views of the hook provided in the invention, respectively in the positions for pre-locking and locking the movement of the latch; and
figure 5 is a detail view of the elements for locking the actuation rod in the position in which the latch is open.

More in detail, the reference numeral 1 generally designates a lower hook of a three-point hitch, which consists of a box-like body 2 which is shaped like a crook with its recess 3 directed upward; a conventional ball pivot 4, with which a working tool for agricultural machines is equipped, engages the opening of said recess.

The active end 6a of a latch 6 protrudes from a first opening 5 which faces the recess 3; the opposite end 6b of said latch can move inside a hollow seat 7 in which the entire mechanism 8 for moving said latch 6 is located.

Said mechanism is essentially composed of a fixed protrusion 9 to which the first end of a connecting rod 11 is articulated at 10; the second end of said connecting rod is in turn coupled, with an articulation 12, to the end 6b of the latch 6; the concurrent shaped end 13a of an actuation rod 13 is also articulated, again at 12, to said end 6b of said latch 6; said actuation rod is provided, at its opposite end 13b, with at least one eye 14 to which the corresponding end of a cable or the like can be rigidly coupled.

Substantially in a median region, said rod 13 is furthermore affected by a shaped notch 15, in which elements 16 for retaining the rod 13 in the position in which the latch 6 is open, can engage; the end 13b of said rod 13 furthermore protrudes outside the body 2 of the hook 1 through a further opening 17, and the end 13a for the articulation of said rod 13, at 12, to the concurrent end 6b of the latch 6 and to the second end of the connecting rod 11 defines a sort of foot which is directed downward.

The movement of the latch 6 toward the inside of the cavity 7 is opposed by the progressive loading of at least one helical spring 18 the turns of which are wound in a torus-like shape, with an axis which is perpendicular to the side walls of the hook, around a fixed supporting pivot 19; the ends of said spring 18, designated by 18a and 18b, operate in a scissors-like manner in contrast respectively with the top 7a of the hollow seat 7 and with the end of the latch 6.

Finally, the elements 16 for locking the rod 13 comprise a further spring 20 the turns whereof are wound around a related pin 21 which extends at right angles from the body 2 of the hook 1, proximate to the opening 17; the ends 20a and 20b also operate in a scissor-like manner, respectively the first in contrast with a wall 22 of a related housing seat defined in the body 2, adjacent to the opening 17, and the second in engagement with the shaped notch 15.

The operation of the invention can be deduced directly from the above description: with reference, for the sake of convenience in description, to a single hook 1 of the pair which constitutes the lower portion of a three-point hitch, when a corresponding ball pivot 4 is inserted in the recess 3 of said hook, the latch 6 automatically retracts toward the inside of the hollow seat 7, rotating the connecting rod 11, which is pivoted at 10, and also progressively overcoming the opposing force of the spring 18, loading it progressively.

The rod 13 follows the movement of the connecting rod 11 and moves axially through the opening 17 toward the outside of the body 2.

Once the ball pivot 4 has been seated, the latch 6, pushed by the loaded spring 18, and in particular by the end 18b of said spring, moves back toward the recess 3, partially engaging the useful opening thereof and resting in contact with both the outer surface of said ball pivot 4 and, on the opposite side, with the upper threshold of the opening 5, i.e. so as to contrast the accidental escape of the ball pivot 4 from the recess 3.

When the operator must release the tool from the agricultural machine, by acting with a simple traction on a cable or another simple similar means which has an end rigidly associated with the eye 14 of the rod 13, he produces an effort, and thus an axial movement of said rod, which rotates the connecting rod 11 and moves the latch 6 into the cavity 7.

If this configuration must be maintained for some time, the operator can insert the end 20b of the spring 20 in the shaped notch 15, applying a torsional load to said spring; for this purpose, said end 20b is preferably shaped like a crook in order to avoid accidental escape from said notch 15; insertion in said notch is in any case normally maintained both by virtue of a recess 15a defined therein and by the force of the spring 20, which is torsionally loaded and has its end 20b rigidly coupled to the notch 15.

Therefore, in order to release the sliding of the latch 6 it is sufficient to subject the rod 13 to a slight axial traction, thus releasing the end 20b of the spring 20 from the recess 15a, said end 20b spontaneously leaving completely the notch 15, and then the rod 13 is released and resumes its normal stock position.

The locking configuration is thus achieved without opening further access openings in the body 2 of the hook 1 in order to allow the correct movement of the components; this allows to keep the structure intact, preventing impurities from entering the cavity 7, for invalidating the correct operation of the elements accommodated therein and their durability.

Furthermore, release from a fixed opening configuration is performed with a simple and rapid maneuver; the operator can furthermore check, directly from the driver's seat, the open or closed configuration of the hook simply by looking at the position of the rod 13.

It should be furthermore noted that the latch 6 rests, during its movement, on conventional pins 23 which, like the pin which constitutes the articulation 10, can be removed from their stock position through the box-like body 2 transversely thereto: this allows to extract or mount, through the opening 5, the entire mutually articulated unit constituted by the latch 6, by the rod 13 and by the connecting rod 11, thus allowing to perform maintenance operations rapidly, comfortably and effectively.

In practice it has been observed that the invention thus described achieves the intended aim and objects.

The invention thus conceived is susceptible to modifications and variations without departing from the teachings of the invention as defined in the claims.

## Claims

1. Automatic locking and release mechanism for three-point hitches, particularly for moving the latch for the automatic locking and controlled release of the ball pivots (4) of tools supported and towed by agricultural machines, having: lower hooks (1), of the type in which each comprises a closed box-like body (2) which defines a crook which is directed outward, with its recess (3) directed upward; a shaped latch (6) entering the opening of said recess (3), said latch (6) protruding from an opening (5) which is defined in said body (2) and faces said recess (3), said latch (6) being movable in a hollow seat (7) defined in said body (2), said hollow seat (7) being provided with said opening (5); and elastic means (18) for opposing the opening movement of said latch (6) characterized in that it comprises:
a protrusion (9) which extends centripetally from the wall opposite to the opening of said hollow seat (7), the first end of a connecting rod (11) being rotatably articulated to said protrusion (9) such that the articulation (12) provided on the second end of said connecting rod (11) is movable along paths shaped like an arc of a circle, said second end of said connecting rod (11) being coupled, by means of said articulation (12), to the end (6b) of the latch (6) which is directed toward the inside of said hollow seat (7);
an actuation rod (13) for opening the latch (6) with a substantially axial effort, said actuation rod (13) including a shaped end (13a) which is concurrent to said end (6b) of said latch (6) which is directed toward the inside of said hollow seat (7) and which is also articulated to said articulation (12), the end (13b) of said actuating rod (13) opposite to said shaped end (13a) protruding from the body (2) of the hook(1); and
elements (16) for locking said rod (13) in the position in which said latch (6) is open.

2. Automatic locking and release mechanism for three-point hitches according to claim 1, characterized in that said actuation rod (13) has a substantially straight body which, at its mutual articulation end (13a), has a foot which is directed downward and, at the opposite end (13b) protruding from the body (2) of the hook (1), at least one eye (14) for coupling to cables or the like, at least one shaped notch (15) being furthermore provided proximate to said foot, said notch (15) being open upward for the engagement of said elements (16) for locking the latch (6) in open configuration.

3. Automatic locking and release mechanism according to claim 1, characterized in that said elastic means (18) for contrasting the movement of the latch are constituted by at least one helical spring (18) the turns whereof being wound in a torus-like shape, with the axis thereof perpendicular to the side walls of the hook (1), around a fixed supporting pivot (19), the ends of said spring (18) contrasting respectively with the top (7a) of said hollow seat (7) and with the end of the latch (6) which is directed toward the inside of said seat.

4. Automatic locking and release mechanism, according to claims 1 and 2, characterized in that said elements (16) for locking the actuation rod (13) in the configuration in which the latch (6) is open are constituted by at least one helical spring (20) the turns whereof being wound around a related pin (21) which extends at right angles from the body (2) of the hook (1), an end (20a) of said spring (20) contrasting with a fixed abutment constituted by a wall (22) of a hollow seat defined in said body (2), the opposite end (20b) of said spring (20) elastically engaging said shaped notch (15).

## Patentansprüche

1. Automatischer Ver- und Entriegelungmechanismus für Dreipunktgestänge, insbesondere zum Bewegen eines Schnappers zum automatischen Verriegeln und gesteuerten Entriegeln der Kugelzapfen (4) von Einrichtungen, die gehalten und gezogen werden von landwirtschaftlichen Maschinen, mit: unteren Haken (1) eines Typs, wobei jeder einen geschlossenen kastenartigen Hakenkörper (2) umfaßt, der eine nach außen gerichtete Krümmung mit seiner nach oben gerichteten Aussparung (3) definiert; einem geformten Schnapper (6), welcher in eine Öffnung der Aussparung (3) eintritt, wobei der Schnapper (6) von einer in dem Körper (2) definierten und der Aussparung (3) gegenüberliegenden Öffnung (5) hervorragt, und der Schnapper (6) in einer in dem Körper (2) definierten hohlen Sitzfläche (7) bewegbar ist, wobei die hohle Sitzfläche (7) mit der Öffnung (5) versehen ist; und elastischen Mitteln (18), um der Öffnungsbewegung des Schnappers (6) entgegenzuwirken, gekennzeichnet durch
einen Vorsprung (9), der sich zentripetal von der gegenüber der Öffnung der hohlen Sitzfläche (7) liegenden Wand erstreckt, wobei das erste Ende einer Verbindungsstange (11) drehbar an dem Vorsprung (9) angelenkt ist, so daß das Gelenk (12), welches an dem zweiten Ende der Verbindungsstange (11) vorgesehen ist, entlang Wegen bewegbar ist, die wie ein Bogen eines Kreises geformt sind, und das zweite Ende der Verbindungsstange (11) durch das Gelenk (12) an dem Ende (6b) des Schnappers (6) gekoppelt ist, welcher gegen das Innere der hohlen Sitzfläche (7) gerichtet ist;
eine Betättigungsstange (13) zum Öffnen des Schnappers (6) mit einer im wesentlichen axialen Anstrengung, bzw. Kraft, wobei die Betättigungsstange (13) ein geformtes Ende (13a), welches mit dem Ende (6b) des Schnappers (6), der gegen das Innere der hohlen Sitzfläche (7) gerichtet ist, konkurrent bzw. mit diesem durch den gleichen Punkt verläuft und welches ebenfalls an dem Gelenk (12) angelenkt ist, und ein zum geformten Ende (13a) entgegengesetztes Ende (13b) der Betättigungsstange (13) aufweist, das aus dem Körper (2) des Hakens (1) hervorragt; und
Elemente (16) zum Verriegeln der Stange (13) in der Stellung, in der der Schnapper (6) geöffnet ist.

2. Automatischer Ver- und Entriegelungsmechanismus für Dreipunktgestänge nach Anspruch 1, dadurch gekennzeichnet, daß die Betättigungsstange (13) einen im wesentlichen geraden Körper aufweist, der an ihrem wechselseitigen Gelenkende (13a) einen Fuß hat, der nach unten gerichtet ist und an dem entgegengesetzten, aus dem Körper (2) des Hakens (1) hervorragenden Ende (13b) mindestens ein Auge (14) zum Ankoppeln an Schnüren oder ähnlichem aufweist, wobei desweiteren mindestens eine geformte Kerbe (15) nahe des Fußes vorgesehen ist, und die nach oben geöffnete Kerbe (15) die Elemente (16) zum Verriegeln des Schnappers (6) in der geöffneten Stellung greift.

3. Automatischer Ver- und Entriegelungsmechanismus nach Anspruch 1, dadurch gekennzeichnet, daß die elastischen Mittel (18) zum Entgegenwirken der Bewegung des Schnappers aus mindestens einer Spiralfeder (18) bestehen, deren Windungen in einer torusartigen Weise um einen festen Halterdrehpunkt (19) gewunden sind, mit einer senkrecht zu den Seitenwänden des Hakens (1) stehenden Achse, wobei die Enden der Feder (18) sowohl im Gegensatz zu der oberen Spitze (7a) der hohlen Sitzfläche (7) als auch zum Ende des Schnappers (6) stehen, der gegen das Innere des Sitzes gerichtet ist.

4. Automatischer Ver- und Entriegelungsmechanismus nach Anspruch 1 und 2, dadurch gekennzeichnet, daß die Elemente (16) zum Verriegeln der Betättigungsstange (13) in der Stellung, in der der Schnapper (6) geöffnet ist, mindestens aus einer Spiralfeder (20) bestehen, deren Windungen um einen Bezugszapfen (21) gewunden sind, der sich in rechten Winkeln zum Körper (2) des Hakens (1) erstreckt, wobei ein Ende (20a) der Feder (20) im Gegensatz zum festen Widerlager steht, welches aus einer Wand (22) einer in dem Körper (2) definierten hohlen Sitzfläche besteht, und das entgegengesetzte Ende (20b) dem Feder (20) elastisch mit der geformten Kerbe (15) im Eingriff steht.

## Revendications

1. Mécanisme de verrouillage automatique et de libération pour des attelages à trois points, en particulier pour déplacer le verrou pour le verrouillage automatique et la libération commandée des pivots à bille (4) d'outils supportés et remorqués par des machines agricoles, comportant : des crochets inférieurs (1) du type dans lequel chacun comprend un corps fermé en forme de boite (2) qui définit un crochet qui est dirigé vers l'extérieur, avec son évidement (3) dirigé vers le haut ; un verrou conformé (6) entrant dans l'ouverture dudit évidement (3), ledit verrou (6) faisant saillie d'une ouverture (5) qui est définie dans ledit corps (2) et fait face audit évidement (3), ledit verrou (6) étant déplaçable dans un siège creux (7) défini dans ledit corps (2), ledit siège creux (7) étant muni de ladite ouverture (5) ; et des moyens élastiques (18) pour s'opposer au mouvement d'ouverture dudit verrou (6), caractérisé en ce qu'il comprend :
une saillie (9) qui s'étend de façon centripète à partir de la paroi opposée à l'ouverture dudit siège creux (7), la première extrémité d'une tige de liaison (11) étant articulée de façon rotative à ladite saillie (9) de sorte que l'articulation (12) prévue sur la seconde extrémité de ladite tige de liaison (11) est déplaçable le long de voies sous forme d'un arc de cercle, ladite seconde extrémité de ladite tige de liaison (11) étant couplée, au moyen de ladite articulation (12), à l'extrémité (6b) du verrou (6) qui est dirigée vers l'intérieur dudit siège creux (7) ;
une tige d'actionnement (13) pour ouvrir le verrou (6) avec un effort sensiblement axial, ladite tige d'actionnement (13) incluant une extrémité conformée (13a) qui est concourante à ladite extrémité (6b) dudit verrou (6) qui est dirigée vers l'intérieur dudit siège creux (7), et qui est également articulée à ladite articulation (12), l'extrémité (13b) de ladite tige d'actionnement (13) opposée à ladite extrémité conformée (13a) faisant saillie du corps (2) du crochet (1) ; et
des éléments (16) pour verrouiller ladite tige (13) dans la position dans laquelle ledit verrou (6) est ouvert.

2. Mécanisme de verrouillage automatique et de libération pour des attelages à trois points selon la revendication 1, caractérisé en ce que ladite tige d'actionnement (13) présente un corps sensiblement rectiligne qui, à son extrémité d'articulation mutuelle (13a), présente un pied qui est dirigé vers le bas et, à l'extrémité opposée (13b) faisant saillie du corps (2) du crochet (1), au moins un oeillet (14) pour le couplage à des câbles ou analogues, au moins une encoche conformée (15) étant de plus prévue à proximité dudit pied, ladite encoche (15) étant ouverte vers le haut pour l'engagement desdits éléments (16) pour verrouiller le verrou (6) en configuration ouverte.

3. Mécanisme de verrouillage automatique et de libération selon la revendication 1,
caractérisé en ce que lesdits moyens élastiques (18) pour s'opposer au mouvement du verrou sont constitués par au moins un ressort hélicoïdal (18), dont les enroulements sont enroulés en forme de tore, avec l'axe de ceux-ci perpendiculaire aux parois latérales du crochet (1), autour d'un pivot de support fixe (19), les extrémités dudit ressort (18) étant opposées respectivement à l'extrémité supérieure (7a) dudit siège creux (7) et à l'extrémité du verrou (6) qui est dirigée vers l'intérieur dudit siège.

4. Mécanisme de verrouillage automatique et de libération selon les revendications 1 et 2, caractérisé en ce que lesdits éléments (16) pour verrouiller la tige d'actionnement (13) dans la configuration dans laquelle le verrou (6) est ouvert sont constitués par au moins un ressort hélicoïdal (20) dont les enroulements sont enroulés autour d'une broche correspondante (21) qui s'étend à angle droit à partir du corps (2) du crochet (1), une extrémité (20a) dudit ressort (20) étant opposée à une butée fixe constituée par une paroi (22) d'un siège creux défini dans ledit corps (2), l'extrémité opposée (20b) dudit ressort (20) engageant élastiquement ladite encoche conformée (15).
